# EUROPÄISCHE PATENTSCHRIFT

(11) **EP 1 758 752 B1**
(45) Veröffentlichungstag und Bekanntmachung des Hinweises auf die Patenterteilung: **18.09.2013**
(21) Anmeldenummer: 05749217.5
(22) Anmeldetag: 06.05.2005
(51) Int. Cl.: B60J 7/20

(54) **CABRIOLET-FAHRZEUG**
CONVERTIBLE
VOITURE CABRIOLET

(30) Priorität: 15.05.2004 DE 102004024229
(43) Veröffentlichungstag der Anmeldung: 07.03.2007
(73) Patentinhaber: Valmet Automotive Oy, 23500 Uusikaupunki (FI)
(72) Erfinder: WEISSMÜLLER, Olaf, 49565 Bramsche (DE); BÖHNKE, Achim, 49545 Tecklenburg (DE); HAHN, Stefan, 49143 Bissendorf (DE)
(74) Vertreter: Kronthaler, Schmidt & Coll.
(86) Internationale Anmeldenummer: PCT/DE2005/000853
(87) Internationale Veröffentlichungsnummer: WO 2005/110789

(56) Entgegenhaltungen:
- DE-A1- 4 106 732
- DE-U1- 29 721 731
- DE-U1- 29 802 871
- DE-U1- 29 812 165
- US-A1- 2003 052 508

## Beschreibung

Die Erfindung betrifft ein Cabriolet-Fahrzeug mit zumindest einer Verkleidung für einen Teil einer Durchtrittsebene des Daches durch die Karosserie nach dem Oberbegriff des Anspruchs 1 sowie eine zugehörige Baueinheit mit einer Verkleidung.

Es sind zahlreiche Cabriolet-Fahrzeuge bekannt, bei denen das Dach im hinteren Fahrzeugbereich unterhalb von Verkleidungsteilen, die die Durchtrittsebene des Daches durch die Oberseite der Karosserie zumindest teilweise optisch verschließen, ablegbar ist.

Die EP 0860 313 A1 zeigt ein Cabriolet-Fahrzeug, bei dem eine an den Insassenraum rückwärtig anschließende und häufig auch als Hutablage bezeichnete Verkleidung um eine horizontale Querachse der Karosserie zu ihrer Öffnung nach vorne schwenkbar ist. Hierfür sind an der Karosserie heckwärts weisende Ausleger angeordnet, an denen die Verkleidung mechanisch gehalten und um die herum sie schwenkbar ist. Die Verkleidung bildet dabei annähernd eine Sekante eines um die horizontale Schwenkachse gezogenen Kreises. Beim Öffnen und Schließen der Verkleidung wird deren vordere Kante somit auf einer Kreisbahn bewegt und gelangt bei einem Gesamtschwenkwinkel von 90° während einer Öffnungsbewegung dadurch in eine gegenüber ihrer Offenstellung weiter nach vorne ragende Lage, so daß eine Karosserieanpassung, etwa eine angepaßte Ausnehmung in einer den Insassenraum rückwärtig begrenzenden Karosseriewand, erforderlich ist.

Die Druckschrift DE 100 64 363 A1 offenbart dem Obergegriff des Anspruchs 1.

Der Erfindung liegt das Problem zugrunde, bei einem Cabriolet-Fahrzeug mit einer beweglichen Verkleidung hinter dem Insassenraum eine raumsparende Bewegungsmöglichkeit für diese zu erreichen.

Die Erfindung löst dieses Problem durch ein Cabriolet-Fahrzeug mit den Merkmalen des Anspruchs 1. Hinsichtlich vorteilhafter Ausgestaltungen der Erfindung wird auf die weiteren Ansprüche 2 bis 12 verwiesen.

In der erfindungsgemäßen Ausbildung nach Anspruch 1 ist durch die gegensinnige Krümmung der Bewegungsbahn des vorderen Kantenbereichs gegenüber der des hinteren Kantenbereichs ermöglicht, daß in einer Phase, in der der hintere Kantenbereich eine große Verlagerungskomponente in Fahrtrichtung aufweist, der vordere Kantenbereich weniger in Fahrtrichtung bewegt wird und daher relativ zurückbleibt. Eine Ausnehmung für die Verkleidung ist dann vermeidbar.

Beispielsweise kann ein mitbewegter Zusatzhebel dem vorderen Kantenbereich eine stärkere Abwärtskomponente vermitteln und damit ebenfalls seine Verlagerung in Fahrtrichtung vermindern.

Die Bewegungsbahn des vorderen Kantenbereichs kann daher zu der des hinteren Kantenbereichs gleich- oder gegensinnig gekrümmt oder im wesentlichen geradlinig sein.

Eine konstruktiv besonders einfache Ausbildung ergibt sich, wenn die Verkleidung über eine Mehrgelenkanordnung gehalten ist, die an zumindest zwei zueinander beabstandeten Schwenkachsen an einem vorderen und einem hinteren Kantenbereich der Verkleidung angreift. Beispielsweise Kulissenführungen oder ähnliche Bewegungshilfen sind dann entbehrlich.

Besonders einfach ist die Mehrgelenkanordnung als Viergelenk mit zwei Schwenklenkern ausgebildet; diese können sich gegenseitig zwangsweise mitbewegen und erfordern keine zusätzlichen Steuerungsmechanismen.

Wenn die Verkleidung mit Hilfe von zumindest einem bananenförmig eingewölbten Schwenkhebel beweglich ist, in dessen Einwölbung bei in Schließstellung liegender Verkleidung und geöffnetem Dach das bei geschlossenem Dach einem Windschutzscheibenrahmen zugewandte vordere Dachende ragt, kann das Dach in seiner Offenstellung sehr weit nach vorne in einen Bereich unterhalb der geschlossenen Verkleidung verlagert sein. Dadurch ist der verbleibende Kofferraum vergrößert.

Damit ist es auch unproblematisch, eine sehr einfache und für die Bewegung günstige Anordnung von Schwenklenkern vorzusehen, bei der die Verkleidung über einen ersten, zwischen einer vorderen Begrenzungswand einer die Verkleidung umfassenden Baueinheit und einem vorderen Ende der Verkleidung erstreckten, und einem zweiten, zwischen einem rückwärtigen Ende eines von der Begrenzungswand ausgehenden Auslegers und dem rückwärtigen Ende der Verkleidung erstreckten, Schwenklenker gehalten ist, weil der nach hinten ragende Ausleger dann nicht den Ablageraum für das Dach beeinträchtigt.

Wenn die Verkleidung durch einen eigenen Antrieb beweglich ist, kann sie auch während der Fahrt und auch bei ruhendem Dach bewegt werden. Die weitere Dachöffnungs- oder -schließzeit, die einen Fahrzeugstillstand erfordert, kann dadurch verkürzt sein.

Gewichtssparend und konstruktiv einfach ist die Verkleidung von einem einstückigen Plattenteil gebildet.

Sehr günstig ist es, wenn die Verkleidung in keiner Phase ihrer Bewegung mit ihrer vorderen Kante weiter in Fahrtrichtung ragt als in ihrer Offenstellung. Dann kann sie in Offenstellung sehr platzsparend sehr nah an eine den Insassenraum begrenzende Rückwand angelegt sein.

Eine zusätzliche Dachsicherung des geöffneten Daches ergibt sich, wenn dem bananenförmig gebogenen Schwenkhebel eine Halterung zur Festlegung des vorderen Dachendes zugeordnet ist.

Weiterhin ist es günstig, wenn die Verkleidung manuell in eine im wesentlichen vertikale Offenstellung bewegbar ist, weil dann eine Notbetätigung vorgesehen ist, die auch bei Ausfall des motorischen Antriebs jederzeit sicherstellt, daß das Dach geschlossen werden kann.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:

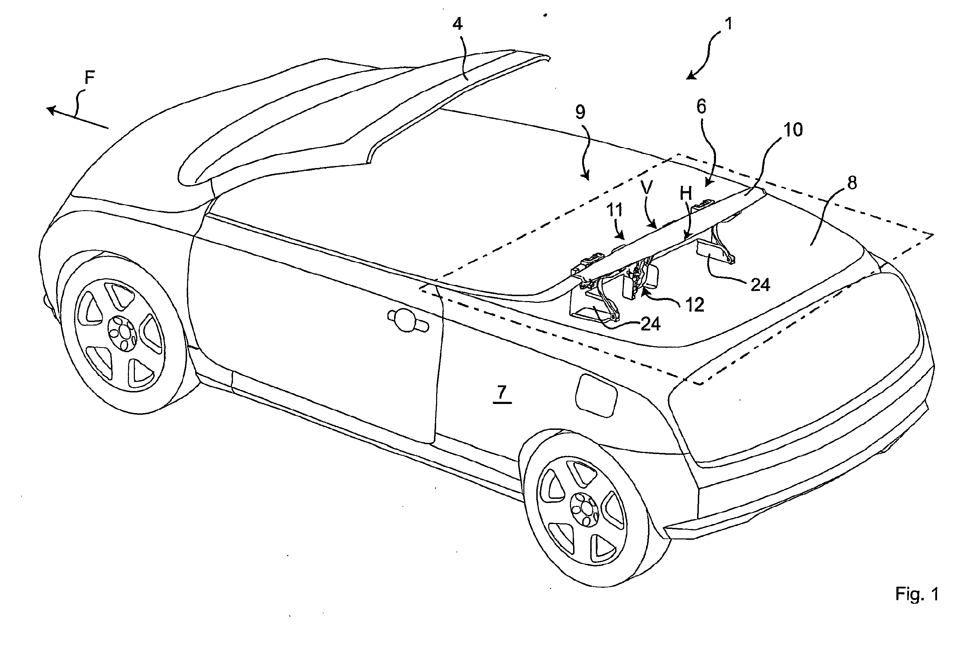

- Fig. 1: einen erfindungsgemäßes Cabriolet-Fahrzeug bei geöffnetem Dach - nicht eingezeichnet - und in im wesentlichen horizontaler Schließstellung liegender Verkleidung,

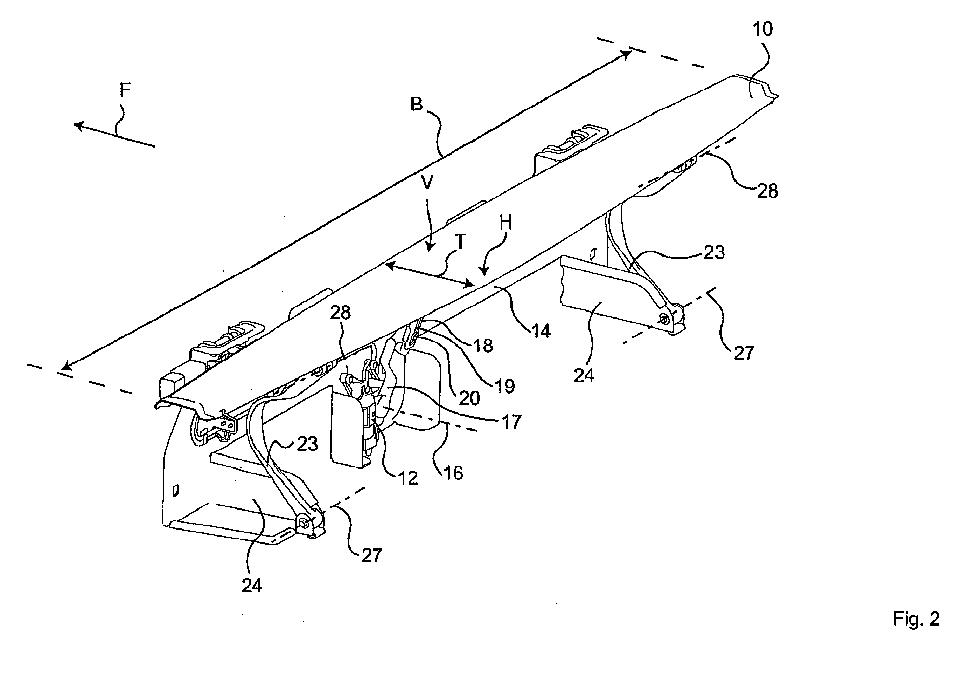

- Fig. 2: eine Einzelteilansicht der die Verkleidung tragenden und als Modul ausgebildeten Baueinheit im geschlossenen Zustand nach Fig. 1,
- Fig. 3: eine Schnittansicht des Moduls in Stellung nach Fig. 2, wobei der Schnitt parallel zur Fahrzeuglängsrichtung gelegt ist und die Dachspitze des abgelegten Daches zusätzlich eingezeichnet ist,
- Fig. 4 bis Fig. 8: den Bewegungsablauf der Öffnung der Verkleidung in Seitenansicht von der im wesentlichen horizontalen Schließstellung (Fig. 4) bis zur im wesentlichen vertikalen Offenstellung (Fig. 8),
- Fig. 9 bis Fig. 13: den Bewegungsablauf der Öffnung der Verkleidung in Ansicht von hinten von der im wesentlichen horizontalen Schließstellung (Fig. 9) bis zur im wesentlichen vertikalen Offenstellung (Fig. 13),

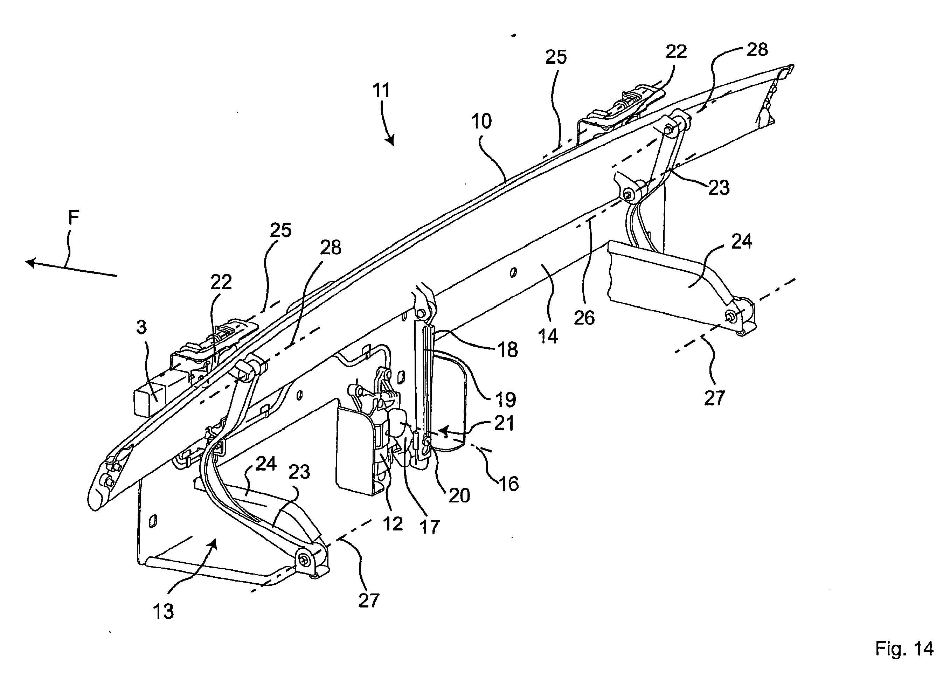

- Fig. 14: das Modul bei in im wesentlichen vertikaler Offenstellung befindlichem Verkleidung aus gleicher Perspektive wie in Fig. 2.

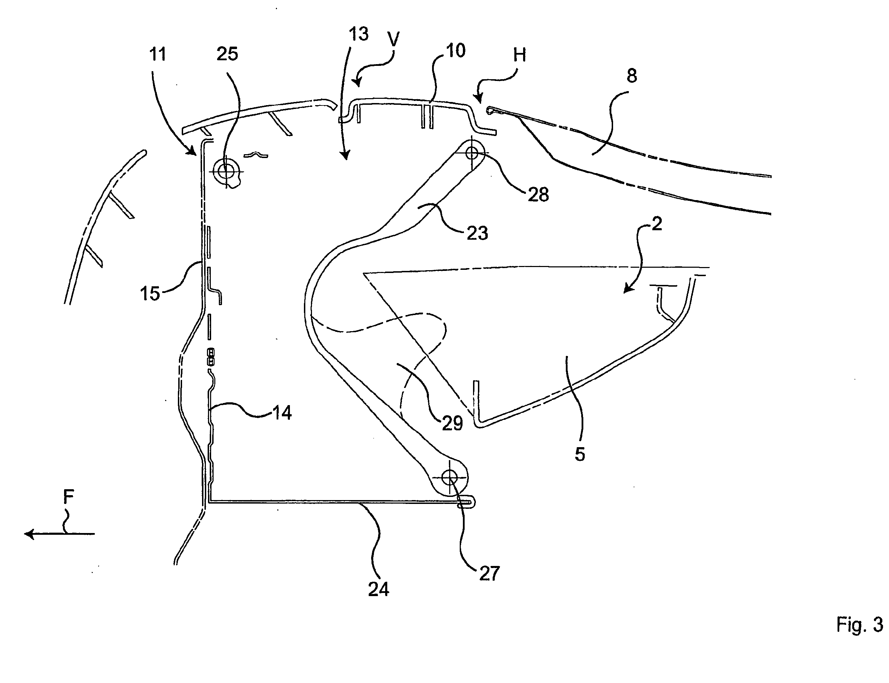

Das in der Zeichnung dargestellte Cabriolet-Fahrzeug 1 umfaßt ein bewegliches Dach 2, von dem hier lediglich in Fig. 3 die im geschlossenen Zustand dem Windschutzscheiben-rahmen 4 zugewandte Dachspitze 5 dargestellt ist. Das Dach 2 umfaßt hier mehrere in sich starre Dachteile, was nicht zwingend ist.

In seinem geöffneten Zustand ist es im heckwärtigen Karosseriebereich ablegbar. Am Fahrzeug 1 ist im Ausführungsbeispiel ein großer hinterer Teil der Durchtrittsebene 6 des Daches 2 durch die Oberseite der Karosserie 7 von einem Verdeckkastendeckel 8 und ein kleiner vorderer Teil von einer ein- oder mehrteiligen, bei geschlossenem Dach in Fahrtrichtung vor dem hinteren Dachende und im Nahbereich hinter dem Insassenraum 9 gelegenen Verkleidung 10 abdeckbar.

Die Verkleidung 10 ist hier von einem einstückigen Leichtbauteil, beispielweise aus Kunststoff oder einem metallischen Schaumwerkstoff, ausgebildet. Sie ist dabei insgesamt Bestandteil einer als Modul ausgebildeten Baueinheit 11, die einen oder mehrere Antriebe 12 und eine die Antriebskraft vermittelnde Mehrgelenkanordnung - insgesamt mit 13 bezeichnet - umfaßt.

Das Modul 11 ist als vormontierte Einheit in einen Karosserierohbau einsetzbar und umfaßt eine nahezu vertikal stehende durchbrochene oder durchgehende Vorderwand 14, die über Befestigungsmittel an einer den Insassenraum 9 begrenzenden Rückwand 15 der Karosserie 7 festlegbar ist. Beispielsweise können in äußeren Eckbereichen vier von Schrauben zu durchgreifende Bohrungen vorgesehen sein. Schweißarbeiten zur Befestigung des Moduls 11 sind dann nicht erforderlich. Es kann zudem insbesondere an verschiedenen Fahrzeugtypen montierbar sein, wobei das Modul 11 hierfür mit jeweils anderen Verkleidungen 10 versehen sein kann. Diese können in Anpassung an die Verhältnisse im jeweiligen Fahrzeug eine jeweils unterschiedliche Breite B und/oder Tiefe T aufweisen und zudem abweichend gestaltet sein.

Der in der Zeichnung dargestellte Antrieb 12 ist von einem handelüblichen Elektromotor gebildet; auch ein Hydraulik- oder Pneumatikantrieb kommt alternativ in Betracht. Während der Dachbewegung kann der Antrieb 12 unbewegt sein. Dann wird die Verkleidung 10 nach vollständiger Ablage des Daches 2 in der Karosserie 7 geschlossen und vor der ersten Dachbewegung im Schließsinn geöffnet. Bei geschlossenem Dach 2 kann die Verkleidung 10 in geöffneter Stellung verbleiben. Dies ist jedoch nicht zwingend.

Der hier gezeigte Elektroantrieb 12 kann über einen einzigen Zentralstecker 3 mit einem von einem Steuergerät angesteuerten Anschluß der Karosserie 7 verbindbar sein. Die Montage des Moduls 11 umfaßt dann nur das mechanische Befestigen der Vorderwand 14 an der Karosseriewand 15 und das Zusammenstecken der elektrischen Verbindung.

Die Verkleidung 10 ist hier zwischen einer im wesentlichen horizontalen Schließstellung bei geöffnetem Dach 2 und einer im wesentlichen vertikalen Offenstellung bei geschlossenem Dach 2 beweglich. Hierfür greift der hier einzige, im Nahbereich der Fahrzeugquermitte liegende Antrieb 12 über einen um eine in Fahrtrichtung F erstreckte Achse 16 schwenkbaren Arm 17 an einem im wesentlichen vertikalen Hebel 18 an, der anderenends am in Fahrtrichtung F vorderen Bereich V der Verkleidung 10 angreift.

Der Hebel 18 ist mit einer seiner Erstreckung folgenden und daher im wesentlichen vertikalen Kulisse 19 versehen, in die an seinem unteren Ende 21 eine Kopplung 20 des Antriebsarms 17 eingreift. Im Normalbetrieb ist die Kopplung unverrückbar, so daß die Hebelbewegung direkt in einen Hub des vorderen Bereichs V der Verkleidung 10 übersetzt wird. Für den Fall einer Störung kann jedoch durch hinreichenden manuellen Druck auf den vorderen Bereich der Verkleidung 10 der Hebel 18 relativ zu den Kopplungsteilen 20 abwärts verschoben werden, so daß letztgenannte dann in den oberen Bereich der Kulisse 19 verlagert werden. Die Verkleidung 10 wird dann von ihrer im wesentlichen horizontalen Schließstellung in ihre im wesentlichen vertikale Offenstellung verlagert, wodurch in jedem Fall der ansonsten von der Verkleidung 10 abgedeckte Teil des Durchtrittsbereich des Daches 2 geöffnet werden kann und somit ein Schließen des Daches 2 ermöglicht wird.

Der Hebel 18 ist an dem Arm 17 über ein Kugelgelenk und an der Verkleidung 10 über eine quer zum Fahrzeug 1 liegende Horizontalschwenkachse angekoppelt. Er kann daher seinen Winkel gegenüber der Vertikalen während der Bewegung derart ändern, daß er während der Öffnung der Verkleidung 10 steiler gestellt wird und sich somit an die Vorderwand 14 anlegt, so daß die Vorderkante V der Verkleidung 10 hierbei nicht nur nach unten, sondern auch nach vorne bewegt wird.

Die Verkleidung 10 ist im montierten Zustand an jeder Fahrzeugquerseite über eine Mehrgelenkanordnung 13 beweglich gehalten. Diese umfaßt einen ersten Schwenklenker 22, der sich vom oberen Bereich der Vorderwand 14 zum vorderen Kantenbereich V der Verkleidung 10 erstreckt, und über einen bananenförmig eingewölbten Schwenklenker 23, der sich vom hinteren Bereich eines von der Vorderwand 14 entgegen der Fahrtrichtung F weisenden Auslegers 24 zum hinteren Kantenbereich H der Verkleidung 10 erstreckt, beweglich. Der Hebel 22 greift an einer im Nahbereich der Vorderkante V der Verkleidung 10 gelegenen horizontalen Schwenkachse 26 an dieser an, der Schwenklenker 23 an einer im Nahbereich zur hinteren Kante H der Verkleidung 10 gelegenen Schwenkachse 28.

Die Mehrgelenkanordnung 13 bildet daher hier ein konstruktiv einfaches Viergelenk aus. Dieses umfaßt die horizontalen Schwenkachsen 25, 26 des ersten Schwenklenkers 22 und die ebenfalls horizontalen Schwenkachsen 27, 28 des eingewölbten Schwenklenkers 23.

In der Einwölbung des Schwenklenkers 23 ragt bei in Schließstellung liegender Verkleidung und geöffnetem Dach 2 das bei geschlossenem Dach einem Windschutzscheibenrahmen 4 zugewandte vordere Dachende 5. Dieses kann damit sehr platzsparend und weit vorne im Fahrzeug 1 untergebracht werden. Dadurch, daß die Verkleidung 10 erst bei vollständig abgelegtem Dach 2 geschlossen wird, ist eine Kollision mit dem bewegten Dach 2 dabei ausgeschlossen.

Es kann zusätzlich dem Schwenklenker 23 ein Halteteil 29 zugeordnet sein (in Fig. 3 gestrichelt eingezeichnet), das bei geschlossenem Dach 2 in die Dachspitze 5 eingreift und diese dadurch sichert.

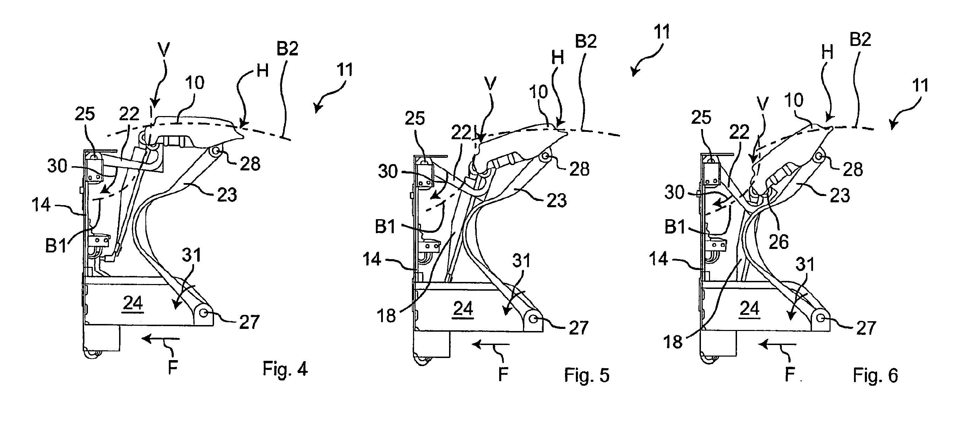

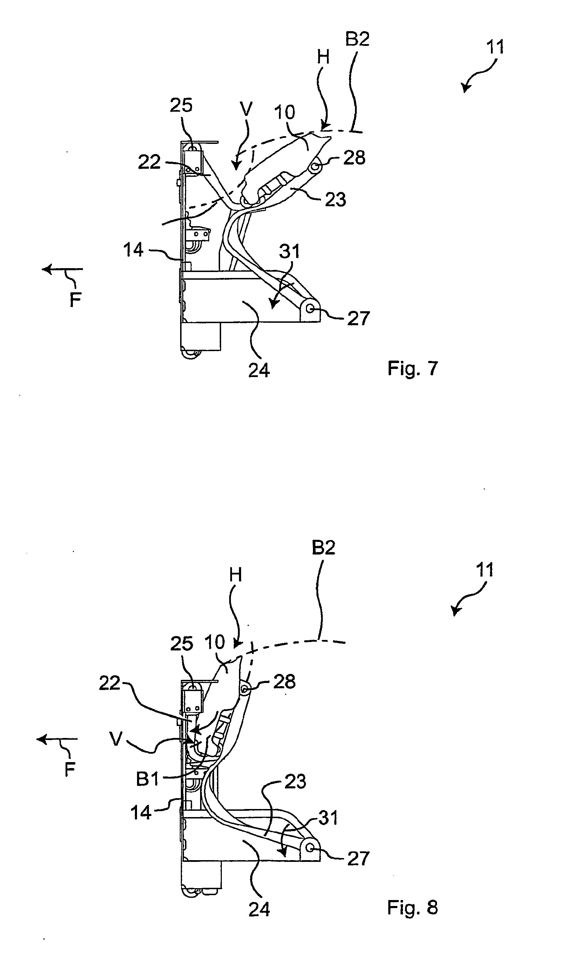

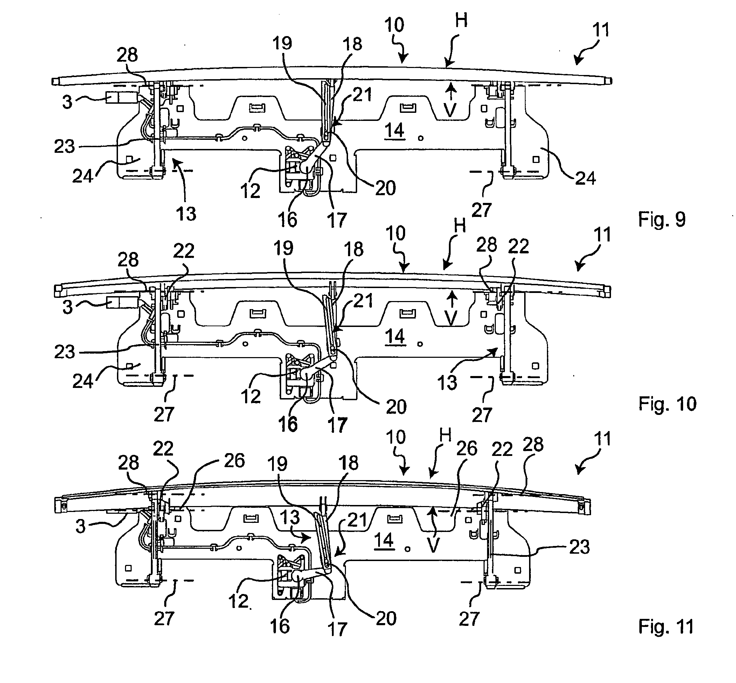

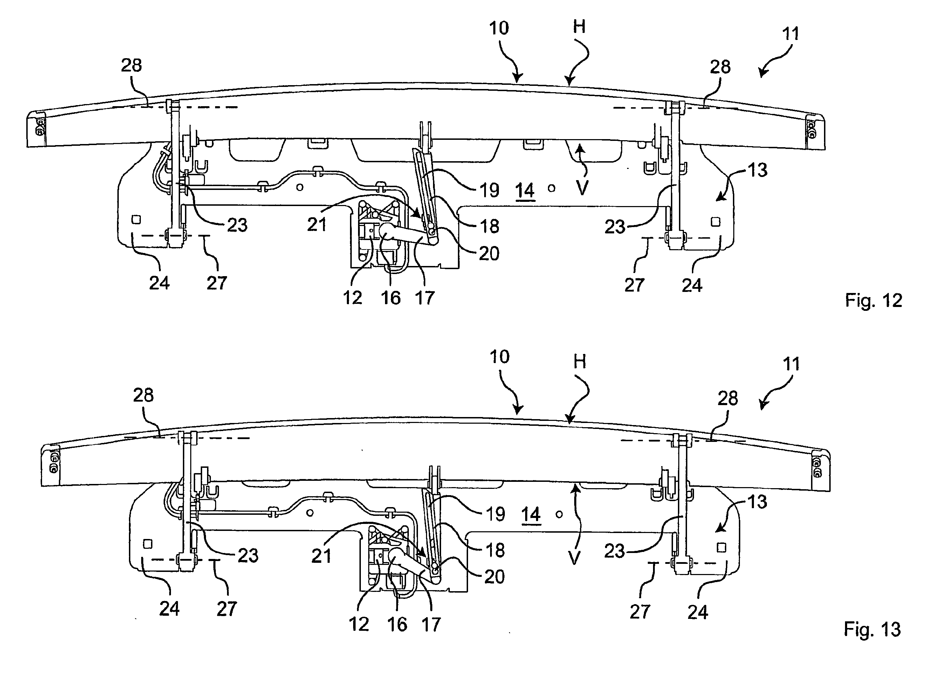

Zur Überführung der Verkleidung 10 aus ihrer geschlossenen in die offene Stellung (Fig. 4 bis Fig. 8 bzw. Fig. 9 bis Fig. 13) schwenkt durch die abwärts gerichtete Kraft auf den Hebel 18 und den daran angelenkten vorderen Kantenbereich V der Verkleidung 10 der hier selbst nicht angetriebene erste Schwenklenker 22 um seine der Vorderwand 14 zugewandte Achse 25 in Richtung des Pfeils 30 abwärts. Gleichzeitig schwenkt der zweite, bananenförmige Schwenklenker 23 um seine am Ausleger 24 gelegene Achse 27 gegensinnig in Richtung des Pfeils 31 abwärts. Die Verkleidung 10 wird dadurch nicht um eine feste Achse verschwenkt, was zur Folge hätte, daß der vordere V und der hintere Kantenbereich H auf zu einander gleich gekrümmten Kreisbahnen verlagert würden, sondern der vordere Kantenbereich V wird auf der rechtsgekrümmten Bahn B1 abwärts und vorwärts verlagert, der hintere Kantenbereich hingegen wird auf der linksgekrümmten Bahn B2 (jeweils in den Figuren 4 bis 8 strichpunktiert eingezeichnet) im wesentlichen vorwärts verlagert. Die Bewegungsbahn B1 des vorderen Kantenbereichs V ist überlagert aus den Schwenkbewegungen um die Achse 25 und um die Achse 26; die Bewegungsbahn B2 ist überlagert aus den Schwenkbewegungen des hinteren Kantenbereichs H um die Achse 27 und um die Achse 28. Die Bewegungsbahnen B1 und B2 sind daher beide keine Kreisbahnen und hier gegenläufig zueinander gekrümmt. Die Bahn B1 hat gegenüber der Bahn B2 einen kleineren Krümmungsradius.

Statt der hier gezeichneten Lösung könnte zum Beispiel an dem Schwenklenker 23 ein Zusatzhebel zum vorderen Ende V angebracht sein, der während der Abwärtsbewegung einschwenkt und dadurch das vordere Ende V stärker abwärts verlagert als das hintere Ende H. Die Lösung mit zwei einander zwangsweise mitziehenden Schwenklenkern 22, 23, die gegenläufig 30, 31 zueinander schwenken und insgesamt ein Viergelenk bilden, ist jedoch konstruktiv besonders einfach und zuverlässig und erfordert keinerlei zusätzlichen Steuerungsaufwand.

Anders als bei einem reinen Verschwenken um eine gemeinsame Achse wird in jedem Fall durch die erfindungsgemäße Verlagerung die vordere Kante V der Verkleidung 10 nicht so weit nach vorne verlagert, daß eine Ausnehmung in der Vorderwand 14 erforderlich wäre.

Dadurch, daß der Ausleger 24 mit der Schwenkachse 27 weit unten gelegen ist und sich der eingewölbte Schwenklenker 23 bei Öffnung der Verkleidung 10 daran anlegt, kann die Dachspitze 5 in Fahrtrichtung weit nach vorne bis in einen Raum ragen, der von der Verkleidung 10 überdeckbar ist und nur wenige Zentimeter vor der Vorderwand 14 gelegen ist, ohne mit der Schwenkachse 27 oder anderen Teilen zu kollidieren. Durch die Einwölbung des Schwenklenkers 23 beläßt dieser auch beim Rückschwenken entgegen der Richtung des Pfeils 31 zum Schließen der Verkleidung 10 genügend Freiraum für die Dachspitze 5. Bei diesem Rückschwenken kann auch das eventuelle Halteteil 29 in sichernden Eingriff mit der Dachspitze 5 gelangen.

Das erfindungsgemäße Cabriolet-Fahrzeug 1 kann sowohl ein Zweisitzer als auch ein Cabriolet-Fahrzeug mit einem größeren Innenraum und etwa zwei Sitzreihen hintereinander sein.

## Patentansprüche

1. Cabriolet-Fahrzeug (1) mit einem im hinteren Fahrzeugbereich in der Karosserie (7) unterhalb einer Durchtrittsebene (6) ablegbaren Dach (2), wobei zumindest ein Teil der Durchtrittsebene (6) bei geöffnetem Dach (2) von einer Verkleidung (10) abdeckbar ist, die aus dieser Schließstellung in eine zumindest nahezu vertikale Offenstellung beweglich ist und die bei geschlossenem Dach (2) in Fahrtrichtung (F) vor dem hinteren Dachende und im Nahbereich hinter dem Insassenraum (9) gelegen ist, wobei ein vorderer Kantenbereich (V) der Verkleidung (10) zumindest während eines Teils ihrer Öffnungsoder Schließbewegung auf einer gegenüber einer Bewegungsbahn (B2) eines hinteren Kantenbereichs (H) der Verkleidung (10) gegenläufig gekrümmten Bewegungsbahn (B1) bewegbar ist
**dadurch gekennzeichnet,**
**daß** ein vorderer Kantenbereich (V) der Verkleidung (10) zumindest während eines Teils ihrer Öffnungs- oder Schließbewegung auf einer gegenüber einer Bewegungsbahn (B2) eines hinteren Kantenbereichs (H) der Verkleidung (10) mit einem kleineren Krümmungsradius verlaufenden Bewegungsbahn (B1) bewegbar ist.

2. Cabriolet-Fahrzeug nach Anspruch 1,
**dadurch gekennzeichnet,**
**daß** die Verkleidung (10) über eine Mehrgelenkanordnung (13), die über zwei zueinander beabstandete Schwenkachsen (26;28) an dem vorderen (V) und dem hinteren Kantenbereich (H) der Verkleidung (10) angreift, gehalten ist.

3. Cabriolet-Fahrzeug nach einem der Ansprüche 1 oder 2,
**dadurch gekennzeichnet,**
**daß** die Mehrgelenkanordnung (13) ein Viergelenk (25;26;27;28) ausbildet.

4. Cabriolet-Fahrzeug (1) nach einem der Ansprüche 1 bis 3,
**dadurch gekennzeichnet,**
**daß** die Verkleidung (10) mit Hilfe von zumindest einem bananenförmig eingewölbten Schwenklenker (23) beweglich ist, in dessen Einwölbung bei in Schließstellung liegender Verkleidung (10) und geöffnetem Dach das bei geschlossenem Dach (2) einem Windschutzscheibenrahmen (4) zugewandte vordere Dachende (5) ragt.

5. Cabriolet-Fahrzeug nach einem der Ansprüche 1 bis 4,
**dadurch gekennzeichnet,**
**daß** die Verkleidung (10) über einen ersten (22), zwischen einer vorderen Begrenzungswand (14) einer die Verkleidung umfassenden Baueinheit (11) und dem vorderen Kantenbereich (V) der Verkleidung (10) erstreckten, und einem zweiten, zwischen einem rückwärtigen Ende eines von der Begrenzungswand ausgehenden Auslegers (24) und dem hinteren Kantenbereich (H) der Verkleidung (10) erstreckten, Schwenklenker (23) gehalten ist.

6. Cabriolet-Fahrzeug nach Anspruch 5,
**dadurch gekennzeichnet,**
**daß** die beiden Schwenklenker (22;23) bei der Bewegung der Verkleidung (10) gegensinnig (30;31) schwenken.

7. Cabriolet-Fahrzeug nach einem der Ansprüche 1 bis 6,
**dadurch gekennzeichnet,**
**daß** die Verkleidung (10) durch einen eigenen Antrieb (12) beweglich ist.

8. Cabriolet-Fahrzeug nach Anspruch 7,
**dadurch gekennzeichnet,**
**daß** der Antrieb (12) von einem Elektromotor gebildet ist, der während der Dachbewegung unbewegt ist.

9. Cabriolet-Fahrzeug nach einem der Ansprüche 1 bis 8,
**dadurch gekennzeichnet,**
**daß** die Verkleidung (10) von einem einstückigen Plattenteil gebildet ist.

10. Cabriolet-Fahrzeug nach Anspruch 9,
**dadurch gekennzeichnet,**
**daß** in Offenstellung die in Schließstellung nach oben weisende Seite des Plattenkörpers (10) zumindest im wesentlichen in Fahrtrichtung (F) weist.

11. Cabriolet-Fahrzeug nach einem der Ansprüche 9 oder 10,
**dadurch gekennzeichnet,**
**daß** die Verkleidung (10) in keiner Phase ihrer Bewegung mit ihrer vorderen Kante (V) weiter in Fahrtrichtung (F) ragt als in ihrer Offenstellung.

12. Cabriolet-Fahrzeug nach einem der Ansprüche 4 bis 11,
**dadurch gekennzeichnet,**
**daß** dem bananenförmig gebogenen Schwenkhebel (23) eine Halterung zur Festlegung (29) des vorderen Dachendes (5) zugeordnet ist.

## Claims

1. A convertible vehicle (1) with a roof (2) which can be stowed in the rear part of the vehicle body (7) below a plane of passage (6), wherein at least part of the plane of passage (6) can be covered by a covering (10) when the roof (2) is open, which covering (10) can be moved from this closed position into an at least approximately vertical opening position and, when the roof (2) is closed, said covering (10) is located in front of the rear roof end, in the direction of travel (F), and in the region close to and behind the passenger compartment (9), with a front edge region (V) of the covering (10) being movable, at least during part of its opening or closing movement, on a path of movement (B1) whose curvature runs counter to a path of movement (B2) of a rear edge region (H) of the covering (10),
**characterised in that**
a front edge region (V) of the covering (10) can be moved, at least during part of the opening or closing movement of the covering (10), on a path of movement (B1) whose radius of curvature is smaller than that of a path of movement (B2) of a rear edge region (H) of the covering (10).

2. The convertible vehicle according to claim 1, **characterised in that** the covering (10) is held by a multi-bar linkage (13) which acts on the front edge region (V) and the rear edge region (H) of the covering (10) via two spaced-apart axes of pivot (26;28).

3. The convertible vehicle according to any one of claims 1 or 2, **characterised in that** the multi-bar linkage (13) forms a four-bar linkage (25;26;27;28).

4. The convertible vehicle (1) according to any one of claims 1 to 3, **characterised in that** the covering (10) can be moved with the help of at least one pivot lever (23) with a banana-shaped inward curvature, into which inward curvature the front roof end (5), facing a windscreen frame (4) when the roof (2) is closed, protrudes when the covering (10) is in the closed position and the roof is opened.

5. The convertible vehicle according to any one of claims 1 to 4, **characterised in that** the covering (10) is held by a first pivot lever (22), which extends between a front partition wall (14) of an assembly (11), comprising the covering, and the front edge region (V) of the covering (10), and by a second pivot lever (23), which extends between a rear end of an arm (24), protruding from the partition wall, and the rear edge region (H) of the covering (10).

6. The convertible vehicle according to claim 5, **characterised in that** both pivot levers (22;23) pivot in opposite directions (30;31) during the movement of the covering (10).

7. The convertible vehicle according to any one of claims 1 to 6, **characterised in that** the covering (10) is movable by its own drive (12).

8. The convertible vehicle according to claim 7, **characterised in that** the drive (12) is formed by an electric motor which does not move during the roof movement.

9. The convertible vehicle according to any one of claims 1 to 8, **characterised in that** the covering (10) is formed by a one-piece plate element.

10. The convertible vehicle according to claim 9, **characterised in that**, in the open position, the side of the plate-shaped body (10) facing up in the closed position points at least substantially in the direction of travel (F).

11. The convertible vehicle according to any one of claims 9 or 10, **characterised in that** the covering (10) does not protrude further in the direction of travel (F) with its front edge (V), in any phase of its movement, than in its open position.

12. The convertible vehicle according to any one of claims 4 to 11, **characterised in that** a support for fixation (29) of the front roof end (5) is assigned to the pivot lever (23) with the banana-shaped curvature.

## Revendications

1. Véhicule cabriolet (1) avec un toit (2) qui peut être rangé à l'arrière du véhicule, dans la carrosserie (7) au-dessous d'un plan de passage (6), ce dernier pouvant être couvert au moins partiellement par un habillage (10) lors de l'ouverture du toit (2), ledit habillage (10) étant déplaçable de cette position de fermeture vers une position d'ouverture au moins presque verticale et ledit habillage (10) étant disposé, lors de la fermeture du toit (2), en amont de l'extrémité arrière du toit, dans la direction de marche (F), et à proximité de l'habitacle (9) ainsi que derrière celui-ci, une région de bord avant (V) dudit habillage (10) étant déplaçable, au moins pendant une partie de son mouvement d'ouverture ou de fermeture, sur un trajet (B1) dont la courbure est opposée à un trajet (B2) d'une région de bord arrière (H) de l'habillage (10),
**caractérisé en ce que**
l'on peut déplacer une région de bord avant (V) de l'habillage (10), au moins pendant une partie du mouvement d'ouverture ou de fermeture de l'habillage (10), sur un trajet (B1) dont le rayon de courbure est inférieur à celui d'un trajet (B2) d'une région de bord arrière (H) de l'habillage (10).

2. Véhicule cabriolet selon la revendication 1, **caractérisé en ce que** l'habillage (10) est supporté par un ensemble à plusieurs articulations (13) qui agit sur la région de bord avant (V) et la région de bord arrière (H) de l'habillage (10) au moyen de deux axes de pivotement (26;28) écartés.

3. Véhicule cabriolet selon l'une quelconque des revendications 1 ou 2, **caractérisé en ce que** l'ensemble à plusieurs articulations (13) constitue un ensemble à quatre articulations (25;26;27;28).

4. Véhicule cabriolet (1) selon l'une quelconque des revendications 1 à 3, **caractérisé en ce que** l'habillage (10) est déplaçable au moyen d'au moins un levier de pivotement (23) présentant une courbure intérieure avec la forme d'une banane, dans laquelle l'extrémité de toit avant (5), tournée vers un cadre de pare-brise (4) lors de la fermeture du toit (2), fait saillie lorsque l'habillage (10) est en position fermée et le toit est ouvert.

5. Véhicule cabriolet selon l'une quelconque des revendications 1 à 4, **caractérisé en ce que** l'habillage (10) est supporté par un premier levier de pivotement (22), qui s'étend entre une paroi de séparation avant (14) d'un ensemble (11) comprenant l'habillage, et la région de bord avant (V) de l'habillage (10), et par un deuxième levier de pivotement (23), qui s'étend entre une extrémité arrière d'un bras (24), qui fait saillie de la paroi de séparation, et la région de bord arrière (H) de l'habillage (10).

6. Véhicule cabriolet selon la revendication 5, **caractérisé en ce que** les deux leviers de pivotement (22;23) pivotent dans des sens opposés (30;31) lors du déplacement de l'habillage (10).

7. Véhicule cabriolet selon l'une quelconque des revendications 1 à 6, **caractérisé en ce que** l'habillage (10) est déplaçable par son propre entraînement (12).

8. Véhicule cabriolet selon la revendication 7, **caractérisé en ce que** l'entraînement (12) est constitué par un moteur électrique qui reste immobile pendant le déplacement du toit.

9. Véhicule cabriolet selon l'une quelconque des revendications 1 à 8, **caractérisé en ce que** l'habillage (10) est constitué par un élément sous forme de plaque réalisé d'un seul tenant.

10. Véhicule cabriolet selon la revendication 9, **caractérisé en ce que**, dans la position d'ouverture, la face de l'élément sous forme d'une plaque (10) tournée vers le haut dans la position de fermeture est orientée au moins sensiblement dans la direction de marche (F).

11. Véhicule cabriolet selon l'une quelconque des revendications 9 ou 10, **caractérisé en ce que** le bord avant (V) de l'habillage (10) ne saillit plus loin dans la direction de marche (F), dans aucune phase de son déplacement, que dans sa position d'ouverture.

12. Véhicule cabriolet selon l'une quelconque des revendications 4 à 11, **caractérisé en ce que** l'on associe avec le levier de pivotement (23), courbé à la manière d'une banane, un support pour la fixation (29) de l'extrémité avant de toit (5).
